# EUROPÄISCHE PATENTSCHRIFT

(11) **EP 1 142 479 B1**
(45) Veröffentlichungstag und Bekanntmachung des Hinweises auf die Patenterteilung: **30.11.2005**
(21) Anmeldenummer: 99910892.1
(22) Anmeldetag: 05.03.1999
(51) Int. Cl.: A21D 13/02, A21D 8/02

(54) **VERFAHREN ZUR HERSTELLUNG VON VOLLKORNBROT**
METHOD FOR PRODUCING CEREAL BREAD
PROCEDE DE PRODUCTION DE PAIN DE CEREALES

(30) Priorität: 25.12.1998 RU 98123076
(43) Veröffentlichungstag der Anmeldung: 10.10.2001
(73) Patentinhaber: GraiNew Bread GmbH, 50859 Köln (DE)
(72) Erfinder: KALNISH, Grigory, Izeslavovich, Tver, 170000 (RU); ANTONOV, Vladimir, Mikhailovich, Krasnoyarsk, 660036 (RU)
(74) Vertreter: Goddar, Heinz J.
(86) Internationale Anmeldenummer: PCT/RU1999/000064
(87) Internationale Veröffentlichungsnummer: WO 2000/038529

(56) Entgegenhaltungen:
- SU-A- 1 214 054
- SU-A3- 1 837 778
- SU-A3- 1 837 779
- DATABASE WPI Section Ch, Week 199833 Derwent Publications Ltd., London, GB; Class D11, AN 1998-385578 XP002246515 & RU 2 097 972 C (VEPRENTSOVA V G), 10. Dezember 1997 (1997-12-10)

## Beschreibung

Die Erfindung gehört zum Bereich Lebensmittelproduktion und kann für die Produktion von Brot und Teigwaren aus Korn angewandt werden.

### Bisheriger Produktionsstand

Es ist ein Verfahren zur Herstellung von Vollkornbrot bekannt, das folgende Produktionsschritte vorsieht: Kornenthülsung, Einweichung von enthülsten Körnern bei der Temperatur 8 - 40° C für 5 - 24 Stunden, Zermahlung von Korn zu einer Kornmasse, Teigzubereitung aus der fertigen Kornmasse und den im Rezept angegebenen Zutaten, Teiggärung und Teigzurichtung mit anschließendem Backen (Erfinderzeugnis der UdSSR Nr. 1214054, MPK, A 21 D 13/02, 1986 (Analogon)).

Eine andere bekannte Herstellungsweise von Vollkornbrot ist die Folgende: enthülste Körner werden vorher im Wasser eingeweicht, dann wird das geschwollene (an Umfang zugenommene) Korn zu einer Kornmasse zermahlen, die entstandene Kornmasse wird zusammen mit Wasser und Hefe zu einem Teig verarbeitet, in Brotleibe geformt und zum Aufgehen zurückgestellt, schließlich gebacken. Die Teigzubereitung erfolgt, indem der Teig während seiner ganzen Gärungsdauer durch Impulse mit der Frequenz von 2-15 Hz verarbeitet wird. Das Korn wird für 6 - 24 Stunden eingeweicht. Die Hefemasse beträgt 2,1 - 5,0% von der Kornmasse (Patent der UdSSR Nr. 1837778, MPK A 21 D13/02, 19993 (Analogon)).

Das Wesen der unten beschrieb enen Produktionsweise liegt dem technischen Wesen des erfindungsgemäßen Verfahrens am nächsten. Das vorher leicht enthülste Korn wird mit dem darin bewahrten Keim im Wasser eingeweicht und zu den nicht mehr als 500 µm großen Teilchen Kornmasse zermahlen. Die zermahlene Kornmasse, Wasser und Hefe werden zu einem Teig verarbeitet. Der Teig wird einer Gärung unterzogen. Der fertige Teig wird zubereitet und anschließend zum Aufgehen zurückgestellt und dann gebacken. Dabei erfolgt die Zubereitung der Teigmasse unter ständigem Umrühren. Als Gärungsmittel wird gepresste inaktivierte Hefe benutzt, deren Masse 2,1 - 5,0% der gesamten Teigmasse beträgt. Die Menge des Wassers muss dem Feuchtigkeitswert der Teigmasse nach der Knetung von 48 - 52% entsprechen (Patent der UdSSR Nr. 1837779, MPK A 21 D13/02, 1993 (Prototyp)).

Ein weiteres Verfahren zur Herstellung von Komteig wird in RU 2 097 972 C (Verprentsova VG, 1997) beschrieben, in dem das Korn vor dem Mahl-Schritt eingeweicht wird. Dabei wird der Einweich-Schritt bis zum Aufplatzen der Kornhülse durchgeführt. Beim anschließenden Zermahlen des Korns werden die oberen Schichten des Korns entfernt.

Bei der Anwendung aller oben beschriebenen Herstellungsverfahren bekommt man in realen Produktionsbedingungen niedriges und festes Brot, das unzureichende und ungleichmäßige Porosität, erhöhte Säurehaltigkeit besitzt und dementsprechend niedrige organoleptische Beschaffenheiten hat.

### Erschließung der Erfindung

Die Erfindung macht sich zur Aufgabe ein industrielles Produktionsverfahren des Vollkornbrotes zu entwickeln, das zu einem komplexen technischen Endergebnis führt, indem es hohe organoleptische Werte (Porosität, Form, Geschmack und Geruch, das Aussehen der Brotrinde, Farbe und Elastizität der Brotkrume) mit hohem biologischem Wert des Produktes vereint.

Die Aufgabe wird erfindungsgemäß durch das Bereitstellen eines Verfahrens zur Herstellung von Vollkornbrot gemäß den anhängenden Ansprüchen 1 bis 9 gelöst.

Bei dem zum erwähnten komplexen technischen Endergebnis führenden erfindungsgemäßen Herstellungsverfahren kommt es darauf an, dass das vorenthülste Korn zusammen mit dem darin bewahrten Keim eingeweicht, dann zur Kornmasse zermahlen und mit den im Rezept vorgesehenen Zutaten zum Teig von einer bestimmten Konsistenz verarbeitet wird. Der Teig wird zugerichtet, zum Aufgehen zurückgestellt und dann gebacken. Laut der Erfindung wird das Korn im Wasser in der Relation 0,6 Liter Wasser zu 1 Kilo Korn eingeweicht, bis das Wasser Säurehaltigkeit von 2 - 12 Grad erreicht und das Korn in dem Maße am Umfang zunimmt, das es beim Pressen platt bleibt und der unbeschädigte Keim frei herausspringt. Vor dem Zermahlen des Korns wird das zum Einweichen benutzte Wasser abgegossen. Das Korn wird zermahlen und die flüssige Fraktion, die sich dabei von der feuchten Kornmasse löst, wird abgeführt. Der zubereitete Teig wird für 15 - 50 Minuten bei einer Temperatur von 35 - 99°C bei konstanten Feuchtigkeitswerten im System "Teig-Atmosphäre" zum Aufgehen gestellt. Das Brot wird bei der Temperatur von 200-320°C gebacken, die ersten 15 - 200 Sekunden der Backzeit - in einem mit Wasserdampf gesättigten Medium.

Zum Einweichen des Korns kann sowohl Wasser, als auch aktiviertes Wasser mit oder ohne nährstoffhaltige Zusätze verwendet werden.

Nach der Entfernung des zum Einweichen verwendeten Wassers kann das Korn vor der Zermahlung noch einmal gewaschen werden.

Es ist zweckmäßig, bei der Zermahlung die abgeführte flüssige Fraktion bei der Zubereitung des Teiges als eine der Teigkomponenten zu benutzen.

### Die beste Anwendungsmöglichkeit der Erfindung

Für die Anwendung des Vollkornbrot-Herstellungsverfahrens können sowohl Weizen- als auch Roggensorten, verwendet werden, vorausgesetzt sie sind für die Brotproduktion geeignet. Das Verfahren wird in den folgenden Schritten abgewickelt.

Das vorher von Unkraut- und Mineralresten befreite Weizen- oder Roggenkorn, eventuell auch Weizen-und-Roggenkorn-Mischung, wird traditionell in einem Spülbad und anschließend mit einer Bürstenmaschine bzw. mit einer Kornenthülsungsmaschine (feuchte Enthülsung, Typ MO-500) leicht enthülst und nachträglich wieder gespült. Das Wesentlichste an diesem Verfahren ist, dass durch die angewandte Technologie der Kornkeim nicht beschädigt werden darf. Die Vorenthülsung darf keine Rissbildung im Korn, verursachen, denn durch die Risse kann der Kornkeim herausfallen.

Das enthülste Korn wird mit Wassermedium, in der Relation von mindestens 0,6 Liter Wasser zu 1 Kilo Korn übergossen. Als Wassermedium kann sowohl gewöhnliches sauberes Wasser als auch aktiviertes Wasser benutzt werden. Aktiviertes Wasser kann die physischen Qualitäten des zukünftigen Teiges positiv beeinflussen und dementsprechend die Porosität des fertigen Brotes erhöhen. Für die Erhöhung des biologischen Nährwertes des Korns können dem Wassermedium verschiedene nährstoffhaltige Zusätze (bioenergetische Nahrungszusätze, Salze) beigemischt werden. Die Einweichung des Korns erfolgt bei einer Temperatur von 25-45°C, bis das Wasser eine Säurehaltigkeit von 2 - 12 Grad erreicht und das Korn in dem Maße an Umfang zugenommen hat, dass es beim leichten Zusammendrücken mit den Fingern platt wird und der Keim unbeschädigt frei herausspringt. Bei solcher Art Einweichung erfolgt eine Aufkeimung des Korns (das erste Stadium der Keimbildung) mit gleichzeitiger Neutralisierung des im Keim enthaltenen Glutations, eines Stoffes, der den unerwünschten Anschwellungseffekt im Teig verursacht und damit die Porosität und die Elastizität des Brotes auf niedrigere Werte bringt. Gleichzeitig garantiert die durch die Einweichung erworbene Beschaffenheit des Keimes, dem angeschwollenen Korn beim leichten Zusammendrücken zu entspringen, so dass die Keime bei der nachfolgenden Kornzermahlung nicht beschädigt werden. Die unbeschädigten Keime bewirken die rechte Bilanzierung von Aminosäuregehalt im Broteiweiß, seine Vollwertigkeit, hohe Konzentration von Vitaminen der B-Gruppe, Vitaminen E und PP, von Mineralstoffen, darunter von Kalzium.

Ferner wird das Wassermedium, das zum Einweichen des Kornes gedient hat, entfernt und abgeführt. Dieser Schritt ermöglicht es, die für den Brotteig typische Säurehaltigkeit, welche sowohl den Geschmack und den Geruch als auch die Porosität des fertigen Vollkornbrotes negativ bewirkt, loszuwerden. Um diese Wirkung zu verstärken, kann das Korn abermals gespült werden. Das angeschwollene und aufgekeimte Korn wird zum Beispiel in ein Sieb geschüttet, dabei tropft das Wassermedium frei ab. Danach kann das Korn mit sauberem Wasser gespült werden.

Anschließend wird das angeschwollene, angekeimte Korn zermahlen und die flüssige Fraktion, die sich dabei von der feuchten Teigmasse löst, wird abgeführt. Dies ist leicht zu erreichen, wenn man das Dispergens "D150" einsetzt. Als Ergebnis erhält man eine Kornmasse, die aus zermahlener Aleuronenschicht der Körner und ungeteilten, unbeschädigten Keimen besteht. Die Abführung der flüssigen Fraktion trägt zur gleichmäßigen Verteilung der Keime in der Kornmasse bei, was sich ferner auf den Prozess der Porenbildung im Brot positiv auswirkt und letztendlich zu hohen organoleptischen Werten und gleichzeitig zu hohem biologischem Nährwert des Brotes führt. Es ist empfehlenswert, die an Nährstoffen (Zucker, Dextrine, Aminosäuren, Pektine und Mineralstoffe) reiche, abgeführte flüssige Fraktion in sauberen Behältern aufzuheben, um sie als eine der Teigkomponenten bei der nachfolgenden Teigzubereitung zu verwenden.

Der Teig wird in der Teigknetmaschine A2-HTM bis zur vorgegebenen Teigkonsistenz je nach der Kornart (Weizen, Roggen oder Weizen-Roggen-Mischung) zubereitet. Die im Rezept vorgegebenen Zutaten (Hefe, Geschmacks- und Nährstoffzutaten) werden hinzugemischt. Für die Anfertigung des Teiges von einer bestimmten Konsistenz können sowohl Wasser als auch die flüssige Fraktion, die sich während der Zermahlung der angeschwollenen Körner angesammelt hat, verwendet werden. Der fertige Teig ist elastisch, gelöst und lässt sich gut runterkneten. Die Bereicherung des Teiges durch die oben erwähnte flüssige Fraktion statt des gewöhnlichen Wassers hat auch eine "technologische Funktion": das in die Fraktion übergegangene Eiweiß des Klebers sorgt für zusätzliche Bindung der Struktur beim Teigkneten, was die Entwicklung einer entfalteten gleichmäßigen Porosität im Brotleib bewirkt und damit hohe organoleptische Werte des Fertigproduktes gewährt.

Der fertige Teig wird in Backformen oder auf Backblechen zubereitet und zum Aufgehen zurückgestellt

Der zubereitete Teig treibt in 15 - 50 Minuten bei einer Temperatur von 35-90°C bei konstanten Feuchtigkeitswerten im System "Teig-Atmosphäre", zum Beispiel im Brotbackofen G4PRE, der mit einer Feuchtigkeitsanlage ausgerüstet ist. Die konstanten Feuchtigkeitswerte im System "Teig - Atmosphäre" sorgen für konstante Teigfeuchtigkeit, die zum Beispiel durch einen Feuchtigkeitsmesser kontrolliert wird. Das Ende der Treibzeit wird visuell festgestellt, indem man sich nach dem Aussehen und dem Umfang der Teigstücke orientiert. Bei automatisierten Backlinien richtet man sich nach der erfahrungsgemäß festgesetzten Zeit, die von Korntyp, Kornsorte und Kornqualität abhängt. Das Aufgehen des Teiges bei konstanten Feuchtigkeitswerten im System "Teig - Atmosphäre" ist für die hohe Qualität des Fertigproduktes sehr wesentlich. Es schließt die Gefahr aus, dass sich an der Teigoberfläche eine trockene Kruste bildet, die den Verdampfungsprozess, der beim Backen des Teiges stattfindet, hindert und dadurch die Unelastizität der Brotkrumme verursacht, auch wenn das Brot gut durch gebacken wird.

Das Brot wird bei der Temperatur von 200 - 320°C in den Brotbacköfen, die mit Wasserdüsen ausgestattet sind (zum Beispiel KeP-400), gebacken. Die ersten 15 Sekunden der Backzeit befindet sich das Brot in einem mit Wasserdampf gesättigten Medium. Die konkreten Backbedingungen hängen von der Masse und der Form des Produktes ab, sowie auch von Korntyp, Kornsorte und Kornqualität.

Das Backen des Brotes im gesättigten Wasserdampfmedium bei solch hohen Temperaturen führt einerseits dazu, dass am Anfang der Backzeit gleichzeitig drei Prozesse parallel verlaufen: das Aufgehen des Teiges wird zu Ende gebracht, die bei der Formung der Brotleibe entstandenen Defekte werden beseitigt, der Teig wird intensiv erwärmt. Andererseits entsteht beim fertigen Brotprodukt eine glänzende Brotrinde, die einen besonderen organoleptischen Wert des nach dem erfindungsgemäßen Verfahren gebackenen Brotes darstellt.

### Beispiel Nr. 1

Im gegenwärtigen Beispiel wurde kasachischer Weizen mit dem Kleberwert von 25% (der Deformierungsindex des Klebers betrugt 80 Einheiten) verwendet.

Das vorher von Unkraut- und Mineralresten befreite, gründlich gewaschene und enthülste Weizenkorn mit unbeschädigtem Kornkeim wurde im Backtrog untergebracht und mit Wasser im Verhältnis 0,9 Liter Wasser zu 1 Kilo Korn übergossen. Die Anfangstemperatur des Wassers betrug 25°C, die Außentemperatur betrug 15°C. Die Einweichung des Korns erfolgte bis das Wasser eine Säurehaltigkeit von 3 Grad erreichte und das Korn in dem Maße an Umfang zugenommen hatte, dass es beim leichten Zusammendrücken mit den Fingern platt wurde und der Keim unbeschädigt heraussprang. Das Wasser, in dem das Korn eingeweicht worden war, wurde entfernt, indem man das Korn in ein Sieb schüttete. Das geschwollene Korn wurde zusätzlich mit 15°C-warmem Wasser gespült. Dann wurde das feuchte geschwollene Korn im Dispergens "D150" zur feuchten Kornmasse mit maximaler Teilchengröße von 450 µm zermahlen. Die sich dabei abgetrennte, mit der Kornmasse nicht gebundene flüssige Fraktion wurde in einem sauberen Behälter gesammelt. Das Ergebnis war eine fein verteilte Kornmasse, die unbeschädigte Keime, Aleuronenschichtteilchen und Hydrosol mit im Wasser aufgelösten Dextrinen, Aminosäuren, Pektinstoffen, Vitaminen, Zucker usw. enthielt.

Dann, um dem Teig beim Kneten eine elastisch-zähflüssige Konsistenz zu verleihen, wurden die vorher gesammelte flüssige Fraktion, Hefe (40 g Hefe zu 1 kg Korn) und Salz dazugegeben. Der Teig wurde in einer Teigknetmaschine zu einer homogenen Masse verarbeitet.

Der fertige Teig wurde in Backformen zu je 350 g verteilt. Die Masse des Fertigproduktes nach dem Backen betrug 250 g.

Der Teig wurde zum Gehen für 50 Minuten bei einer Temperatur von 35°C unter konstanten Feuchtigkeitswerten im System "Teig - Atmosphäre" in den Backofen G4PRE gestellt.

Das Brot wurde im Brotbackofen KEP-400 bei einer Temperatur von 310 ± 10 °C gebacken. In den ersten 60 Sekunden wurde im Backofen mit Hilfe von Wasserdüsen eine mit Wasserdampf gesättigte Atmosphäre geschaffen und aufrechterhalten. Durch das Beobachtungsfenster des Ofens wurde der Moment der Herausbildung einer etwas unebenen, dunkelbraunen, glänzenden, oberen Rinde überwacht, danach wurde der Backprozess unterbrochen.

Das fertige Vollkornbrot war hoch und umfangreich, hellbraun mit zarten knusprigen nicht sehr dicken Seitenkrusten. An den Seitenflächen des Brotes waren kennzeichnende flache bräunliche Keimeinsprengsel gleichmäßig verteilt. Die Brotkrume war porös und elastisch mit hervorstechenden bräunlichen eingesprengten Keimen. Zahlreiche Poren mit dünnen Trennwänden waren über die ganze Schnittstelle gleichmäßig verteilt. Die Porosität des Brotes betrug 73%.

### Beispiel Nr. 2

Das Verfahren wurde wie im Beispiel Nr.1. ausgeführt. Es wurden aber Weizenkörner verwendet, deren Menge zu 65% aus weichem kasachischem Weizen mit dem Kleberwert von 26% (der Deformierungsindex des Klebers betrug 75 Einheiten) und zu 35% aus gewöhnlichem weichen Weizen (aus den Regionen Tula und Lipezk) mit dem Kleberwert von 21-22% (der Deformierungsindex des Klebers betrug 85 Einheiten) bestand.

Als Wassermedium zum Einweichen des Korns diente aktiviertes Wasser, das im Verhältnis 0,7 Liter Wasser zu 1 Kilo Korn über das Korn geschüttet wurde. Die Anfangstemperatur des aktivierten Wassers betrug 30 °C, während die Außentemperatur 25 °C ausmachte. Die Einweichung des Korns erfolgte, bis das aktivierte Wasser eine Säurehaltigkeit von 7,5 Grad erreichte und das Korn in dem Maße am Umfang zugenommen hatte, dass es beim leichten Zusammendrücken platt wurde und der Keim unbeschädigt heraussprang.

Um ein Fertigprodukt von 400 g Masse zu erhalten, verteilte man den Teig in Backformen zu je 470 g und stellte ihn zum Gehen auf.

Das Gehen des Teiges dauerte 15 Minuten bei einer Temperatur von 90°C unter konstanten Feuchtigkeitswerten im System "Teig - Atmosphäre".

Das Brot wurde bei einer Temperatur von 210 ± 10 °C und die ersten 100 Sekunden in einem mit Wasserdampf gesättigten Medium gebacken.

Sobald sich auf der Brotoberfläche eine glänzende, braune leicht unebene Rinde gebildet hatte, wurde der Backprozess beendet.

Das fertige Brot war hoch und umfangreich, hellgelb mit zarten knusprigen mitteldicken Seitenkrusten. An den Seitenflächen des Brotes waren kennzeichnende flache bräunliche Keimeinsprengsel gleichmäßig verteilt. Die Brotkrume war elastisch und porös mit hervorstechenden eingesprengten bräunlichen Keimen. Zahlreiche Poren mit dünnen Trennwänden waren über die ganze Schnittstelle gleichmäßig verteilt. Die Porosität des Brotes betrug 67 %.

### Beispiel Nr. 3

Das Verfahren wurde hauptsächlich wie im Beispiel 2 durchgeführt, enthielt aber folgende Abweichungen:
1. Als Wassermedium zum Einweichen des Korns wurde einfaches Wasser in der Relation 0,6 Liter Wasser zu 1 Kilo Korn und mit einer Anfangstemperatur von 45°C verwendet. Die Einweichung des Korns erfolgte, bis das Wasser eine Säurehaltigkeit von 9 Grad erreicht hatte.
2. Um ein Fertigprodukt von 800 g Masse zu erhalten, verteilte man den Teig in Backformen zu je 890 g.
3. Das Gehen des Teiges dauerte 25 Minuten bei einer Temperatur von 60°C unter konstanten Feuchtigkeitswerten im System "Teig - Atmosphäre".
4. Das Brot wurde bei der Temperatur von 280 ± 10 °C (die ersten 180 Sekunden in einem mit Wasserdampf gesättigten Medium) gebacken.

Das fertige Brot war hoch und umfangreich, hellgelb mit zarten knusprigen, nicht dicken Seitenkrusten. An den Seitenflächen des Brotes waren kennzeichnende flache bräunliche Keimeinsprengsel gleichmäßig verteilt. Die Brotkrume war elastisch und porös mit hervorstechenden eingesprengten bräunlichen Keimen. Zahlreiche Poren mit dünnen Trennwänden waren über die ganze Schnittstelle gleichmäßig verteilt. Die Porosität des Brotes betrug 74 %.

### Industrielle Anwendbarkeit

Die Erfindung kann bei der Produktion von Vollkornbrot mit hohem biologischem Nährwert und mit hohen organoleptischen Werten angewendet werden.

Das erfindungsgemäße Verfahren sieht keine speziellen Operationen zur Teiggärung vor, ungeachtet dessen gewährleistet es die Fermentation des Teiges ohne seine Säurehaltigkeit zu erhöhen. Gleichzeitig sorgt es für aktive Bildung zahlreicher Poren, die sich gleichmäßig über den ganzen Brotleib verteilen, was zur besseren Verdaulichkeit des Brotes beiträgt. Das fertige Brot ist hoch und hat eine elastische Brotkrume und knusprige glänzende Rinden, deren Farbe von Hellgelb bis Dunkelbraun reicht. Die Brotrinde ist mit hervorstechenden braunen Einsprengseln versehen.

## Patentansprüche

1. Verfahren zur Herstellung von Vollkornbrot, umfassend die folgenden Schritte:
a) Reinigen des Korns
b) Einweichen des gereinigten Korns mit dem darin bewahrten Keim, wobei das Korn in einem wässrigen Medium in einem Verhältnis von nicht weniger als 0,6 1 Wasser zu 1 kg Kornsolange eingeweicht wird, bis die Säurehaltigkeit des Wassers 2-12 Grad erreicht und das Korn in dem Maße an Umfang zunimmt, daß es beim leichten Zusammendrücken platt wird und der Keim unbeschädigt herausspringt,
c) Entfernen des wässrigen Mediums aus Schritt b),
d) Zermahlen des angeschwollenen, angekeimten Korns aus Schritt b) zu einer Kornmasse, wobei die sich dabei bildende flüssige Fraktion abgetrennt wird,
e) Erhalten der Kornmasse aus Schritt d), die die zermahlene Aleuronschicht der Körner und ungeteilte, unbeschädigte Keime umfaßt,
f) Verarbeiten der Kornmasse von Schritt e) und weiteren geeigneten Zutaten zu einem Teig,
g) Aufbewahren des Teigs aus Schritt f) für 15-50 Minuten bei einer Temperatur von 35-99 °C in einem System mit konstanter Feuchtigkeit, das für eine konstante Feuchtigkeit des Teigs sorgt, und
h) Backen des Teigs aus Schritt g) bei einer Temperatur von 200-320 °C, wobei das Backen in den ersten 15-200 Sekunden in einem mit Wasserdampf gesättigten Medium stattfindet.

2. Verfahren nach Anspruch 1, wobei das zum Einweichen des Korns verwendete wässrige Medium einfaches Wasser ist.

3. Verfahren nach Anspruch 1, wobei das zum Einweichen des Kornsverwendete wässrige Medium aktiviertes Wasser ist.

4. Verfahren nach Anspruch 3, wobei das aktivierte Wasser Nahrungszusätze enthält.

5. Verfahren nach einem der vorhergehenden Ansprüche, wobei das Korn nach Schritt c) zusätzlich gespült wird.

6. Verfahren nach einem der vorhergehenden Ansprüche, wobei die in Schritt d) abgetrennte Flüssigkeit bei der Teigverarbeitung in Schritt f) als eine der Zutaten wieder verwendet wird.

7. Verfahren nach einem der vorhergehenden Ansprüche, wobei die weiteren geeigneten Zutaten Hefe, Geschmacks- und Nährstoffmittel sind.

8. Verfahren nach einem der vorhergehenden Ansprüche, wobei das System mit konstanter Feuchtigkeit in Schritt g) ein Brotbackofen G4PRE ist, der mit einer Feuchtigkeitsanlage ausgerüstet ist.

9. Verfahren nach einem der vorhergehenden Ansprüche, wobei die konstante Feuchtigkeit des Teigs in Schritt g) durch einen Feuchtigkeitsmesser kontrolliert wird.

## Claims

1. Method for producing cereal bread, comprising the following steps:
a) purifying the grain
b) soaking the purified grain with the seed preserved therein, wherein the grain is soaked in an aqueous medium with a ratio of not less than 0.6 1 water to 1 kg grain until the acid content of the water reaches 2-12 degrees and the size of the grain increases to a degree where it becomes flat when slightly compressed and the seed jumps out undamaged,
c) removing the aqueous medium from step b),
d) grinding the swollen grain which started to germinate from step b) to a grain mass, wherein the liquid fraction which forms thereby is separated,
e) obtaining the grain mass from step d), which comprises the grinded aleurone layer of the grains and undivided, undamaged seeds,
f) processing the grain mass from step e) and the further suitable ingredients to a dough,
g) keeping the dough from step f) for 15-50 minutes at a temperature from 35-99°C in a system with constant humidity, which provides a constant humidity of the dough, and
h) baking the dough from step g) at a temperature from 200-320°C, wherein the baking during the first 15-200 seconds takes place in a medium which is saturated with water vapor.

2. Method according to claim 1, wherein the aqueous medium which is used for soaking the grain is regular water.

3. Method according to claim 1, wherein the aqueous medium which is used for soaking the grain is activated water.

4. Method according to claim 3, wherein the activated water contains nutrition ingredients.

5. Method according to one of the foregoing claims, wherein the grain is additionally rinsed after step c).

6. Method according to one of the foregoing claims, wherein the separated liquid in step d) is reused as one of the ingredients during the processing of the dough in step f).

7. Method according to one of the foregoing claims, wherein the further suitable ingredients are yeast, flavourings and nutrients.

8. Method according to one of the foregoing claims, wherein the system with constant humidity in step g) is the bread oven G4PRE, which is equipped with a moisturizing system.

9. Method according to one of the foregoing claims, wherein the constant humidity of the dough in step g) is controlled by a humidity gager.

## Revendications

1. Méthode pour la production de pain complet, comprenant les étapes suivantes :
a) purification du grain
b) ramolissage du grain purifié avec le germe préservé à l'intérieur du grain, le grain étant ramolli dans un milieu aqueux présentant un rapport de ne pas moins de 0,6 1 d'eau à 1 kg de grains jusqu'à ce que la teneur en acide de l'eau atteigne 2-12 degrés et la dimension du grain augmente tellement qu'il devient plat quand il est légèrement comprimé et le germe saute ou sort du grain sans être endommagé,
c) élimination du milieu aqueux de l'étape b),
d) broyage du grain de l'étape b) gonflé commençant à germer jusqu'a ce qu'on obtienne une masse de grains, la fraction liquide qui se forme pendant le broyage étant séparée,
e) obtention de la masse de grains de l'étape d) comprenant la couche aleurone des grains et des germes non divisés et intacts,
f) traitement de la masse de grains de l'étape e) et des autres ingrédients appropriés pour obtenir une pâte,
g) maintien de la pâte de l'étape f) pendant 15-50 minutes à une température de 35 à 99° dans un système à humidité constante assurant une humidité constante de la pâte, et
h) cuisson de la pâte de l'étape g) à une température de 200 à 320°, la cuisson ayant lieu pendant les premières 15-200 secondes dans un milieu étant saturé avec vapeur d'eau.

2. Méthode conformément à la revendication 1, le milieu utilisé pour broyer le grain étant de l'eau ordinaire.

3. Méthode conformément à la revendication 1, le milieu utilisé pour broyer le grain étant de l'eau activée.

4. Méthode conformément à la revendication 3, l'eau activée comportant des additifs alimentaires.

5. Méthode conformément à une des revendications précédentes, le grain étant lavé additionnellement après l'étape c).

6. Méthode conformément à une des revendications précédentes, le liquide séparé au cours de l'étape d) étant réutilisé comme un des ingrédients lors du traitement de la pâte dans l'étape f).

7. Méthode conformément à une des revendications précédentes, les autres ingrédients appropriés étant levure, aromates et substances nutritives.

8. Méthode conformément à une des revendications précédentes, le système à humidité constante dans l'étape g) étant un four à pain G4PRE qui est équipé d'un dispositif de réglage d'humidité.

9. Méthode conformément à une des revendications précédentes, l'humidité constante de la pâte étant contrôlée dans l'étape g) par un hygromètre.
